# EUROPEAN PATENT APPLICATION

(11) **EP 4 024 945 A1**
(43) Date of publication of application: **06.07.2022**
(21) Application number: 20859165.1
(22) Date of filing: 28.07.2020
(51) Int. Cl.: H04W 28/24, H04L 12/24

(54) **INFORMATION PROCESSING METHOD, APPARATUS, AND DEVICE, AND COMPUTER READABLE STORAGE MEDIUM**

(30) Priority: 27.08.2019 CN 201910795158
(71) Applicant: China Mobile Communication Co., Ltd Research Institute, Beijing 100053 (CN); CHINA MOBILE COMMUNICATIONS GROUP CO., LTD., Beijing 100032 (CN)
(72) Inventor: LI, Qin, Beijing 100032 (CN)
(74) Representative: GPI Brevets
(86) International application number: PCT/CN2020/105210
(87) International publication number: WO 2021/036650

(57) **Abstract**

An information processing method, apparatus and device, and a computer-readable storage medium are provided. The information processing method includes: receiving a first request from an MEC, the first request including information about a target application; obtaining network data about the target application in response to the first request; obtaining predicted service experience data in accordance with the network data; and transmitting a first response to the MEC, the first response including the predicted service experience data.

## Description

### CROSS-REFERENCE TO RELATED APPLICATION

This application claims a priority of the Chinese patent application No.201910795158.5 filed on August 27, 2019, which is incorporated herein by reference in its entirety.

### TECHNICAL FIELD

The present disclosure relates to the field of communication technology, in particular to an information processing method, apparatus and device, and a computer-readable storage medium.

### BACKGROUND

Network Data Analytics Function (NWDAF) is an intelligent service entity in a core network for collecting and analyzing data. As an important 5^{th}-Generation (5G) application, edge computing also needs to enrich its edge intelligence capabilities through the output of intelligence capabilities of big network.

However, in the related art, there is no scheme of performing interaction between the NWDAF and a Mobile Edge Computing (MEC) to enrich the edge intelligence capability.

### SUMMARY

An object of the present disclosure is to provide an information processing method, apparatus and device, and a computer-readable storage medium, so as to improve the edge intelligence capability of the edge computing.

In a first aspect, the present disclosure provides in some embodiments an information processing method performed by an NWDAF, and the method includes: receiving a first request from an MEC, where the first request includes information about a target application; obtaining network data about the target application in response to the first request; obtaining predicted service experience data in accordance with the network data; and transmitting a first response to the MEC, where the first response includes the predicted service experience data.

The receiving the first request from the MEC includes: receiving the first request from the MEC through a Network Exposure Function (NEF).

The transmitting the first response to the MEC includes transmitting the first response to the MEC through the NEF.

The obtaining the network data about the target application in response to the first request includes: transmitting a second request to a Network Function (NF) in response to the first request; and receiving a second response from the NF, where the second response includes the network data about the target application.

The obtaining the predicted service experience data in accordance with the network data includes: taking the network data as an input of a prediction model, running the prediction model, and taking an output of the prediction model as the predicted service experience data. The prediction model is obtained through training in accordance with service experience data obtained from an Application Function (AF) and network data obtained from the NEF.

Subsequent to receiving the first request from the MEC, the information processing method further includes: transmitting a third request to an AF; and receiving a third response from the AF, where the third response includes service experience data.

The obtaining the predicted service experience data in accordance with the network data includes: obtaining a prediction model in accordance with the service experience data and the network data; re-obtaining network data from an NF; and taking the re-obtained network data as an input of the prediction model, running the prediction model, and taking an output of the prediction model as the predicted service experience data.

In a second aspect, the present disclosure provides in some embodiments an information processing method for an MEC, and the method includes: transmitting a first request to an NWDAF, where the first request includes information about a target application; receiving a first response from the NWDAF, where the first response includes predicted service experience data about the target application obtained by the NWDAF; and obtaining a parameter adjustment strategy for the target application in accordance with the predicted service experience data.

The transmitting the first request to the NWDAF includes: transmitting a first request to the NWDAF through an NEF.

The receiving the first response from the NWDAF includes: receiving the first response from the NWDAF through the NEF.

In a third aspect, the present disclosure provides in some embodiments an information processing apparatus for an NWDAF, and the apparatus includes: a first reception module configured to receive a first request from an MEC, where the first request includes information about a target application; a first obtaining module configured to obtain network data about the target application in response to the first request; a second obtaining module configured to obtain predicted service experience data in accordance with the network data; and a first transmission module configured to transmit a first response to the MEC, where the first response includes the predicted service experience data.

The first reception module is configured to receive the first request from the MEC through an NEF, and the first transmission module is configured to transmit the first response to the MEC through the NEF.

The first obtaining module includes: a first transmission sub-module configured to transmit a second request to an NF in response to the first request; and a first reception sub-module configured to receive a second response from the NF, where the second response includes the network data about the target application.

The second obtaining module is configured to take the network data as an input of a prediction model, run the prediction model, and take an output of the prediction model as the predicted service experience data. The prediction model is obtained through training in accordance with service experience data obtained from an AF and network data obtained from the NEF.

The information processing apparatus further includes: a second transmission module configured to transmit a third request to an AF; and a second reception module configured to receive a third response from the AF, where the third response includes service experience data.

The second obtaining module includes: a first obtaining sub-module configured to obtain a prediction model in accordance with the service experience data and the network data; a first reception sub-module configured to re-obtain network data from an NF; and a second obtaining sub-module configured to take the re-obtained network data as an input of the prediction model, run the prediction model, and take an output of the prediction model as the predicted service experience data.

In a fourth aspect, the present disclosure provides in some embodiments an information processing apparatus for an MEC, and the apparatus includes: a first transmission module configured to transmit a first request to an NWDAF, where the first request includes information about a target application; a first reception module configured to receive a first response from the NWDAF, where the first response includes predicted service experience data about the target application obtained by the NWDAF; and a processing module configured to obtain a parameter adjustment strategy for the target application in accordance with the predicted service experience data.

The first transmission module is configured to transmit a first request to the NWDAF through an NEF, and the first reception module is configured to receive the first response from the NWDAF through the NEF.

In a fifth aspect, the present disclosure provides in some embodiments an information processing device for an NWDAF, and the device includes a processor and a transceiver. The transceiver is configured to receive a first request from an MEC, where the first request includes information about a target application. The processor is configured to obtain network data about the target application in response to the first request and obtain predicted service experience data in accordance with the network data. The transceiver is further configured to transmit a first response to the MEC, where the first response includes the predicted service experience data.

The transceiver is further configured to receive the first request from the MEC through an NEF, and transmit the first response to the MEC through the NEF.

The transceiver is further configured to transmit a second request to an NF in response to the first request, and receive a second response from the NF, and the second response includes the network data about the target application.

The processor is further configured to take the network data as an input of a prediction model, run the prediction model, and take an output of the prediction model as the predicted service experience data. The prediction model is obtained through training in accordance with service experience data obtained from an AF and network data obtained from the NEF.

The transceiver is further configured to transmit a third request to an AF, and receive a third response from the AF, and the third response includes service experience data.

The processor is further configured to: obtain a prediction model in accordance with the service experience data and the network data; re-obtain network data from an NF; and take the re-obtained network data as an input of the prediction model, run the prediction model, and take an output of the prediction model as the predicted service experience data.

In a sixth aspect, the present disclosure provides in some embodiments an information processing device for an MEC, and the device includes a processor and a transceiver. The transceiver is configured to: transmit a first request to an NWDAF, where the first request includes information about a target application; and receive a first response from the NWDAF, where the first response includes predicted service experience data about the target application obtained by the NWDAF. The processor is configured to obtain a parameter adjustment strategy for the target application in accordance with the predicted service experience data.

The transceiver is further configured to transmit a first request to the NWDAF through an NEF, and receive the first response from the NWDAF through the NEF.

In a seventh aspect, the present disclosure provides in some embodiments a communication device, and the communication device includes a transceiver, a memory, a processor, and a computer program stored in the memory and executed by the processor. The processor is configured to read the computer program in the memory, so as to implement steps of the information processing method in the first aspect, or steps of the information processing method in the second aspect.

In an eighth aspect, the present disclosure provides in some embodiments a computer-readable storage medium storing therein a computer program. The computer program is executed by a processor, so as to implement steps of the information processing method in the first aspect, or steps of the information processing method in the second aspect.

According to the embodiments of the present disclosure, through the interaction between the NWDAF and the MEC, it is able for the MEC to obtain the parameter adjustment strategy for the target application in accordance with the predicted service experience data from the NWDAF, thereby to improve the edge intelligence capability of the edge computing.

### BRIEF DESCRIPTION OF THE DRAWINGS

In order to illustrate the technical solutions of the present disclosure in a clearer manner, the drawings desired for the present disclosure will be described hereinafter briefly. Obviously, the following drawings merely relate to some embodiments of the present disclosure, and based on these drawings, a person skilled in the art may obtain the other drawings without any creative effort.
Fig. 1 is a first flow chart of an information processing method according to an embodiment of the present disclosure;
Fig. 2 is a second flow chart of the information processing method according to an embodiment of the present disclosure;
Fig. 3 is a third flow chart of the information processing method according to an embodiment of the present disclosure;
Fig. 4 is a first schematic view showing an information processing apparatus according to an embodiment of the present disclosure;
Fig. 5 is a second schematic view showing an information processing apparatus according to an embodiment of the present disclosure;
Fig. 6 is a third schematic view showing an information processing device according to an embodiment of the present disclosure;
Fig. 7 is a fourth schematic view showing an information processing device according to an embodiment of the present disclosure;
Fig. 8 is a fifth schematic view showing an information processing device according to an embodiment of the present disclosure; and
Fig. 9 is a sixth schematic view showing an information processing device according to an embodiment of the present disclosure.

### DETAILED DESCRIPTION

In order to make the objects, the technical solutions and the advantages of the present disclosure more apparent, the present disclosure will be described hereinafter in a clear manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

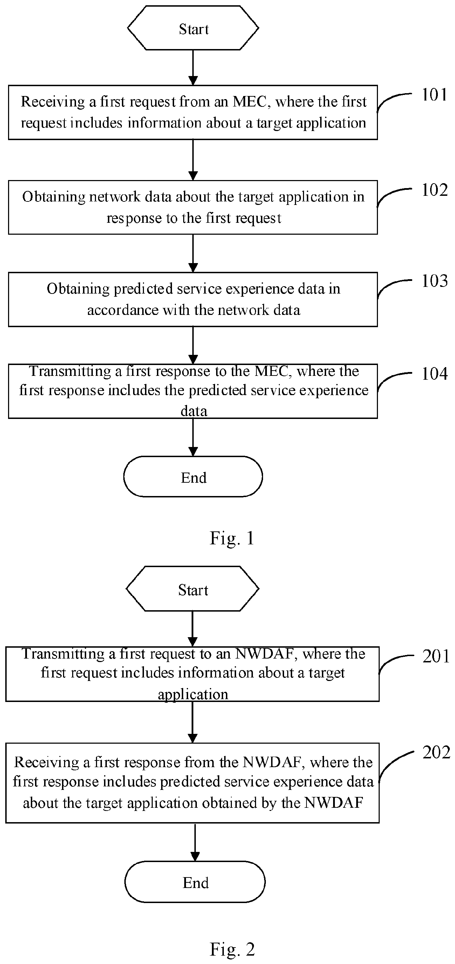

Referring to Fig.1, Fig. 1 is a flow chart of an information processing method provided in an embodiment of the present disclosure applied to an NWDAF. As shown in Fig.1, the method includes Step 101 to Step 104.

Step 101: receiving a first request from an MEC, where the first request includes information about a target application.

In the embodiments of the present disclosure, the NWDAF receives the first request from the MEC through an NEF, and the information about the target application includes, but not limited to, an identifier (ID) of the target application.

In the embodiments of the present disclosure, for example, the first request is Nnwdaf_AnalyticsSubscription_Subscribe (Analytic ID = Service Experience). Table 1 shows information and meanings in this message.

**Table 1**

| Information | Description |
|---|---|
| Application ID | ID of to-be-analyzed application |
| Locations of Application | Location information about the to-be-analyzed application |
| Service Experience | Service experience-related data about the to-be-analyzed application, e.g., a composite indicator such as video Mean Opinion Score (MOS), and data reflecting the service experience such as a ratio of video lag, first packet delay and downloading speed, etc. |
| Timestamp | Timestamp for evaluating service experience, e.g., a current time (it means that the service experience at the current time is evaluated) or a future time (it means that the service experience at the future time is predicted) |

Step 102: obtaining network data about the target application in response to the first request.

In the embodiments of the present disclosure, the second request is transmitted to an NF in response to the first request, and a second response is received from the NF. The second response includes the network data about the target application, e.g., uplink/downlink traffic, the quantity of retransmitted uplink/downlink packets, the quantity of disordered uplink/downlink packets, and uplink/downlink Round Trip Time (RTT).

Step 103: obtaining predicted service experience data in accordance with the network data.

In the embodiments of the present disclosure, a prediction model is trained offline in advance, and the prediction model reflects an association relationship between the service experience data and the network data. In addition, the prediction model is obtained through training in accordance with service experience data from the AF and network data from the NEF.

In this step, in order to improve the processing efficiency, the network data is taken as an input of the prediction model, the prediction model is run, and then an output of the prediction model is taken as the predicted service experience data. The predicted service experience data may be, e.g., a vMos value, a lag proportion, a delay proportion, and a downloading speed.

Step 104: transmitting a first response to the MEC, where the first response includes the predicted service experience data.

In this step, the first response is transmitted to the MEC through the NEF.

In the embodiments of the present disclosure, the first response may be, e.g., Nnwdaf_AnalyticsSubscription_Notify (estimated Service Experience). Table 2 shows information and meanings in this message.

**Table 2**

| Information | Description |
|---|---|
| Timestamp | Timestamp corresponding to predicted service experience data |
| Location Info | Region corresponding to a to-be-analyzed application |
| Application ID | ID of the to-be-analyzed application |
| Estimated Service Experience | Service experience data about the to-be-analyzed application, e.g., a composite indicator such as video (MOS, and data reflecting the user experience such as a ratio of video |
| | lag, first packet delay and a downloading speed, etc. |

In the embodiments of the present disclosure, through the interaction between the NWDAF and the MEC, it is able for the MEC to obtain a parameter adjustment strategy for the target application in accordance with the predicted service experience data from the NWDAF, thereby to improve the edge intelligence capability of the edge computing.

In the embodiments of the present disclosure, subsequent to Step 101, a third request is transmitted to the AF, a third response is received from the AF, and the third response includes the service experience data. In Step 103, the prediction model is obtained through offline training in accordance with the obtained service experience data and the network data. Then, the network data is re-obtained from the NF and taken as an input of the prediction model, the prediction model is run, and an output of the prediction model is taken as the predicted service experience data.

Referring to Fig. 2, Fig. 2 is a flow chart of an information processing method provided in an embodiment of the present disclosure applied to a MEC. As shown in Fig. 2, the method includes Step 201 and Step 202.

Step 201: transmitting a first request to an NWDAF, where the first request includes information about a target application.

The MEC may transmit the first request to the NWDAF through an NEF, and a form of the first request and a content therein may refer to those mentioned hereinabove.

Step 202: receiving a first response from the NWDAF, where the first response includes predicted service experience data about the target application obtained by the NWDAF.

The MEC may receive the first response from the NWDAF through the NEF, and a form of the first response and a content therein may refer to those mentioned hereinabove.

Step 203: obtaining a parameter adjustment strategy for the target application in accordance with the predicted service experience data.

The parameter adjustment strategy may include adjusting a code rate, a frame rate, an encoding/decoding format, compression quality and an image size of a video, so as to perform a matching operation in accordance with a user's network condition in a better manner, thereby to improve the service experience.

According to the embodiments of the present disclosure, through the interaction between the NWDAF and the MEC, it is able for the MEC to obtain the parameter adjustment strategy for the target application in accordance with the predicted service experience data from the NWDAF, thereby to improve the edge intelligence capability of the edge computing.

In the embodiments of the present disclosure, the NWDAF may obtain the service experience data from an AF or a Software Development Kit (SDK), and perform training in accordance with the service experience data and associated network data to obtain an association model. Next, the NWDAF may infer or predict service experience data within a current or future time period through the association model. Taking a video application as an example, the service experience data may include a vMos value, a lag proportion, a delay proportion, a downloading speed, etc. Then, the NWDAF may output an inferring or prediction result to an edge computing platform, the edge computing platform analyzes whether a currently-provided service parameter matches network quality of a user in accordance with the result. If the service parameter does not match the network quality, the service parameter, e.g., a code rate, a frame rate, an encoding/decoding format, compression quality or an image size of a video, may be adjusted, so as to match the user's network quality in a better manner, thereby to improve the service experience.

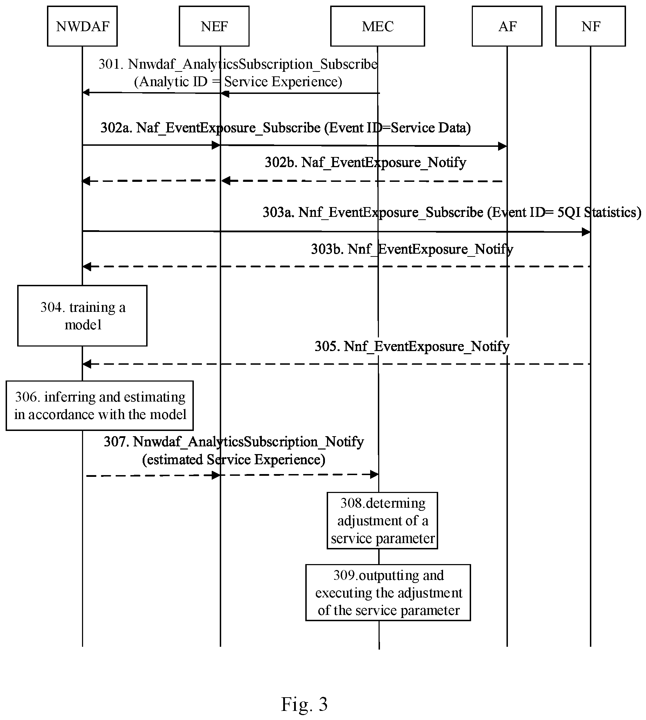

Referring to Fig. 3, Fig. 3 is a flow chart of an information processing method. As shown in Fig. 3, the method includes Step 301 to Step 309.

Step 301: an MEC initiates an analyzing and subscription request Nnwdaf_AnalyticsSubscription_Subscribe for service experience to an NWDAF through an NEF.

Steps 302a and 302b: upon the reception of the subscription request from the MEC, the NWDAF initiates an event subscription request Naf_EventExposure_Subscribe (Event ID=Service Data) to an AF, so as to request to obtain service experience data.

The AF transmits an event subscription response Naf_EventExposure_Notify to the NWDAF.

Steps 303a and 30b: the NWDAF initiates an event subscription request Nnf_EventExposure_Subscribe (Event ID= 5QI Statistics) to a 5GC NF(s), so as to request to obtain corresponding network data.

The NF transmits an event subscription response Nnf_EventExposure_Notify to the NWDAF.

Step 304: the NWDAF performs offline training in accordance with the obtained service experience data and network data, so as to obtain an association model between the service experience data about a to-be-analyzed application and the network data.

Steps 305 and 306: the NWDAF inputs network data collected again from the NF(s) into the trained association model, so as to estimate and predict service experience data about the to-be-analyzed application within a current or future time period.

Of course, in Step 304, the association model may also be pre-trained, and in this case, a process of training the model may be omitted, so as to further accelerate the processing.

Step 307: the NWDAF transmits Nnwdaf_AnalyticsSubscription_Notify(estimated Service Experience) to the MEC through the NEF, so as to transmit the estimated service experience data about the to-be-analyzed application.

Step 308: the MEC determines adjustment of a service parameter in accordance with statistics or prediction about the service experience data about the to-be-analyzed application from the NWDAF. For example, a service parameter of a video, e.g., a code rate, a frame rate, an encoding/decoding format, a compression quality or an image size of the video, may be adjusted, so as to perform a matching operation in accordance with a user's network condition, thereby to improve the user experience.

Step 309: the MEC outputs and executes the adjustment of the service parameter.

Based on the above, in the embodiments of the present disclosure, through additional messages between the NWDAF and the MEC, it is able to provide an interaction function between a Core Network (CN) intelligent analyzing module and an edge computing side, thereby to achieve the complementation and sharing of their capabilities, and enrich the service capabilities of the entire network.

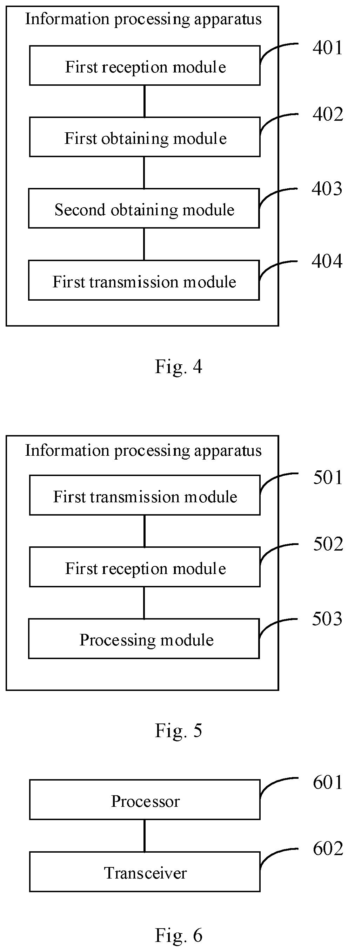

The present application further provides an information processing apparatus for an NWDAF. Referring to Fig. 4, Fig. 4 is a schematic view showing an information processing apparatus according to an embodiment of the present disclosure. A principle of the information processing apparatus for solving the problem is similar to that of the information processing method, so the implementation of the information processing apparatus may refer to that mentioned hereinabove, which will thus not be particularly defined herein.

As shown in Fig. 4, the information processing apparatus includes: a first reception module 401 configured to receive a first request from an MEC, where the first request includes information about a target application; a first obtaining module 402 configured to obtain network data about the target application in response to the first request; a second obtaining module 403 configured to obtain predicted service experience data in accordance with the network data; and a first transmission module 404 configured to transmit a first response to the MEC, where the first response includes the predicted service experience data.

Optionally, the first reception module 401 is configured to receive the first request from the MEC through an NEF, and the first transmission module is configured to transmit the first response to the MEC through the NEF.

Optionally, the first obtaining module 402 includes: a first transmission sub-module configured to transmit a second request to an NF in response to the first request; and a first reception sub-module configured to receive a second response from the NF, where the second response includes the network data about the target application.

Optionally, the second obtaining module 403 is configured to take the network data as an input of a prediction model, run the prediction model, and take an output of the prediction model as the predicted service experience data. The prediction model is obtained through training in accordance with service experience data obtained from an AF and network data obtained from the NEF.

Optionally, the information processing apparatus further includes: a second transmission module configured to transmit a third request to an AF; and a second reception module configured to receive a third response from the AF, where the third response includes service experience data.

Optionally, the second obtaining module 403 includes: a first obtaining sub-module configured to obtain a prediction model in accordance with the service experience data and the network data; a first reception sub-module configured to re-obtain network data from an NF; and a second obtaining sub-module configured to take the re-obtained network data as an input of the prediction model, run the prediction model, and take an output of the prediction model as the predicted service experience data.

According to the embodiments of the present disclosure, through the interaction between the NWDAF and the MEC, it is able for the MEC to obtain the parameter adjustment strategy for the target application in accordance with the predicted service experience data from the NWDAF, thereby to improve the edge intelligence capability of the edge computing.

The information processing apparatus in the embodiments of the present disclosure may be used to implement the above-mentioned method embodiments with a similar principle and a similar technical effect, which will thus not be particularly defined herein.

The present application further provides an information processing apparatus for an MEC. Referring to Fig. 5, Fig. 5 is a schematic view showing an information processing apparatus according to an embodiment of the present disclosure. A principle of the information processing apparatus for solving the problem is similar to that of the information processing method, so the implementation of the information processing apparatus may refer to the implementation of the information processing method, which will thus not be particularly defined herein.

As shown in Fig. 5, the information processing apparatus includes: a first transmission module 501 configured to transmit a first request to an NWDAF, where the first request includes information about a target application; a first reception module 502 configured to receive a first response from the NWDAF, where the first response includes predicted service experience data about the target application obtained by the NWDAF; and a processing module 503 configured to obtain a parameter adjustment strategy for the target application in accordance with the predicted service experience data.

The first transmission module 501 is configured to transmit a first request to the NWDAF through an NEF, and the first reception module 502 is configured to receive the first response from the NWDAF through the NEF.

The information processing apparatus in the embodiments of the present disclosure may be used to implement the above-mentioned method embodiments with a similar principle and a similar technical effect, which will thus not be particularly defined herein.

The present application further provides an information processing device for an NWDAF. Referring to Fig. 6, Fig. 6 is a schematic view showing an information processing apparatus according to an embodiment of the present disclosure. A principle of the information processing device for solving the problem is similar to that of the information processing method, so the implementation of the information processing device may refer to the implementation of the information processing method, which will thus not be particularly defined herein.

As shown in Fig. 6, the information processing device includes a processor 601 and a transceiver 602.

The transceiver 602 is configured to receive a first request from an MEC, where the first request includes information about a target application; and obtain network data about the target application in response to the first request and obtain predicted service experience data in accordance with the network data.

The transceiver 602 is further configured to transmit a first response to the MEC, the first response including the predicted service experience data.

The transceiver 602 is further configured to receive the first request from the MEC through an NEF, and transmit the first response to the MEC through the NEF.

The transceiver 602 is further configured to transmit a second request to an NF in response to the first request, and receive a second response from the NF, and the second response includes the network data about the target application.

The processor 601 is further configured to take the network data as an input of a prediction model, run the prediction model, and take an output of the prediction model as the predicted service experience data.

The prediction model is obtained through training in accordance with service experience data obtained from an AF and network data obtained from the NEF.

The transceiver 602 is further configured to transmit a third request to an AF, and receive a third response from the AF, and the third response includes service experience data.

The processor 601 is further configured to: obtain a prediction model in accordance with the service experience data and the network data; re-obtain network data from an NF; and take the re-obtained network data as an input of the prediction model, run the prediction model, and take an output of the prediction model as the predicted service experience data.

The information processing device in the embodiments of the present disclosure may be used to implement the above-mentioned method embodiments with a similar principle and a similar technical effect, which will thus not be particularly defined herein.

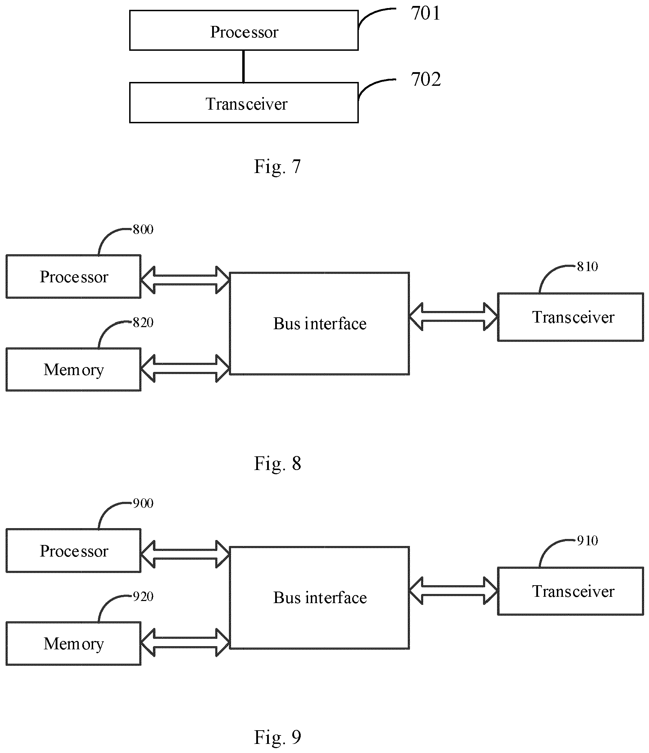

The present application further provides an information processing device for an MEC. Referring to Fig. 7, Fig. 7 is a schematic view showing an information processing apparatus according to an embodiment of the present disclosure. A principle of the information processing device for solving the problem is similar to that of the information processing method, so the implementation of the information processing device may refer to the implementation of the information processing method, which will thus not be particularly defined herein.

As shown in Fig. 7, the information processing device includes a processor 701 and a transceiver 702.

The transceiver 702 is configured to: transmit a first request to an NWDAF, where the first request includes information about a target application; and receive a first response from the NWDAF, the first response including predicted service experience data about the target application obtained by the NWDAF.

The processor 701 is configured to obtain a parameter adjustment strategy for the target application in accordance with the predicted service experience data.

The transceiver 702 is further configured to transmit a first request to the NWDAF through an NEF, and receive the first response from the NWDAF through the NEF.

The information processing device in the embodiments of the present disclosure may be used to implement the above-mentioned method embodiments with a similar principle and a similar technical effect, which will thus not be particularly defined herein.

As shown in Fig. 8, the present disclosure further provides in some embodiments a communication device for an NWDAF, which includes a processor 800, a transceiver 810 and a memory 820.

The processor 800 is configured to read a program in the memory 820, so as to: receive through the transceiver 810 a first request from an MEC, where the first request includes information about a target application; obtain network data about the target application in response to the first request; obtain predicted service experience data in accordance with the network data; and transmit a first response to the MEC, the first response including the predicted service experience data.

The transceiver 810 is configured to receive and transmit data under the control of the processor 800.

In Fig. 8, bus architecture may include a number of buses and bridges connected to each other, so as to connect various circuits for one or more processors 800 and one or more memories 820. In addition, as is known in the art, the bus architecture may be used to connect any other circuits, such as a circuit for a peripheral device, a circuit for a voltage stabilizer and a power management circuit, thus it will not be further described herein. A bus interface provides interfaces. The transceiver 810 may consist of a plurality of elements, i.e., a transmitter and a receiver for communication with any other devices over a transmission medium. The processor 800 may take charge of managing the bus architecture as well as general processings. The memory 820 may store therein data for the operation of the processor 800.

The processor 800 may take charge of managing the bus architecture as well as general processings. The memory 820 may store therein data for the operation of the processor 800.

The processor 800 is further configured to read the computer program to perform: receiving the first request from the MEC through an NEF, and transmitting the first response to the MEC through the NEF.

The processor 800 is further configured to read the computer program to perform: transmitting a second request to an NF in response to the first request; and receiving a second response from the NF, where the second response includes the network data about the target application.

The processor 800 is further configured to read the computer program to perform: taking the network data as an input of a prediction model, running the prediction model, and taking an output of the prediction model as the predicted service experience data.

The prediction model is obtained through training in accordance with service experience data obtained from an AF and network data obtained from the NEF.

The processor 800 is further configured to read the computer program to perform: transmitting a third request to an AF; and receiving a third response from the AF, where the third response includes service experience data.

The processor 800 is further configured to read the computer program to implement: obtaining a prediction model in accordance with the service experience data and the network data; re-obtaining network data from an NF; and taking the re-obtained network data as an input of the prediction model, running the prediction model, and taking an output of the prediction model as the predicted service experience data.

As shown in Fig. 9, a communication device for an MEC of an embodiment of the present application includes a processor 900 configured to read a program in a memory 920 to perform: transmitting through the transceiver 910 a first request to an NWDAF, where the first request includes information about a target application; receiving a first response from the NWDAF, where the first response includes predicted service experience data about the target application obtained by the NWDAF; and obtaining a parameter adjustment strategy for the target application in accordance with the predicted service experience data.

The transceiver 910 is configured to receive and transmit data under the control of the processor 900.

In Fig. 9, bus architecture may include a number of buses and bridges connected to each other, so as to connect various circuits for one or more processors 900 and one or more memories 920. In addition, as is known in the art, the bus architecture may be used to connect any other circuits, such as a circuit for a peripheral device, a circuit for a voltage stabilizer and a power management circuit, thus it will not be further described herein. A bus interface provides interfaces. The transceiver 910 may consist of a plurality of elements, i.e., a transmitter and a receiver for communication with any other devices over a transmission medium. The processor 900 may take charge of managing the bus architecture as well as general processings. The memory 920 may store therein data for the operation of the processor 900.

The processor 900 may take charge of managing the bus architecture as well as general processings. The memory 920 may store therein data for the operation of the processor 900.

The processor 900 is further configured to read the computer program to perform: transmitting a first request to the NWDAF through an NEF, and receiving the first response from the NWDAF through the NEF.

The present disclosure further provides in some embodiments a computer-readable storage medium storing therein a computer program. The computer program is executed by a processor so as to perform: receiving a first request from an MEC, where the first request includes information about a target application; obtaining network data about the target application in response to the first request; obtaining predicted service experience data in accordance with the network data; and transmitting a first response to the MEC, where the first response includes the predicted service experience data.

The receiving the first request from the MEC includes: receiving the first request from the MEC through an NEF. The transmitting the first response to the MEC includes: transmitting the first response to the MEC through the NEF.

The obtaining the network data about the target application in response to the first request includes: transmitting a second request to an NF in response to the first request; and receiving a second response from the NF, where the second response includes the network data about the target application.

The obtaining the predicted service experience data in accordance with the network data includes: taking the network data as an input of a prediction model, running the prediction model, and taking an output of the prediction model as the predicted service experience data. The prediction model is obtained through training in accordance with service experience data obtained from an AF and network data obtained from the NEF.

Subsequent to receiving the first request from the MEC, the computer program is executed by the processor to perform: transmitting a third request to an AF and receiving a third response from the AF, where the third response includes service experience data.

The obtaining the predicted service experience data in accordance with the network data includes: obtaining a prediction model in accordance with the service experience data and the network data; re-obtaining network data from an NF; and taking the re-obtained network data as an input of the prediction model, running the prediction model, and taking an output of the prediction model as the predicted service experience data.

The present disclosure further provides in some embodiments a computer-readable storage medium storing therein a computer program. The computer program is executed by a processor to perform: transmitting a first request to an NWDAF, where the first request includes information about a target application; receiving a first response from the NWDAF, where the first response includes predicted service experience data about the target application obtained by the NWDAF; and obtaining a parameter adjustment strategy for the target application in accordance with the predicted service experience data.

The transmitting the first request to the NWDAF includes transmitting a first request to the NWDAF through an NEF, and the receiving the first response from the NWDAF includes receiving the first response from the NWDAF through the NEF.

It should be further appreciated that in the embodiments of the present application, the device and method may be implemented in any other ways. For example, the embodiments for the apparatus is merely for illustrative purposes, and the modules or units are provided merely on the basis of their logic functions. During the actual application, some modules or units may be combined together or integrated into another system. Alternatively, some functions of the module or units may be omitted or not executed. In addition, the coupling connection, direct coupling connection or communication connection between the modules or units may be implemented via interfaces, and the indirect coupling connection or communication connection between the modules or units may be implemented in an electrical or mechanical form or in any other form.

In addition, the functional units in the embodiments of the present disclosure may be integrated into a processing unit, or the functional units may exist independently, or two or more functional units may be combined together. These units may be implemented in the form of hardware, or hardware plus software.

The functional units implemented in a software form may be stored in a computer-readable medium. These software functional units may be stored in a storage medium and include several instructions so as to enable a computer device (a personal computer, a server or network device) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

It should be appreciated that, the embodiments of the present disclosure are implemented by hardware, software, firmware, middleware, microcode or a combination thereof. For the hardware implementation, the processor includes one or more of an Application Specific Integrated Circuits (ASIC), a Digital Signal Processor (DSP), a DSP device (DSPD), a Programmable Logic Device (PLD), a Field-Programmable Gate Array (FPGA), a general-purpose processor, a controller, a microcontroller, a microprocessor, any other electronic unit capable of achieving the functions in the present disclosure, or a combination thereof.

For the software implementation, the scheme in the embodiments of the present disclosure is implemented through modules capable of achieving the functions in the present disclosure (e.g., processes or functions). Software codes are stored in the memory and executed by the processor. The memory is implemented inside or outside the processor.

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. An information processing method, performed by a Network Data Analytics Function (NWDAF), comprising:
receiving a first request from a Mobile Edge Computing (MEC), wherein the first request comprises information about a target application;
obtaining network data about the target application in response to the first request;
obtaining predicted service experience data in accordance with the network data; and
transmitting a first response to the MEC, wherein the first response comprises the predicted service experience data.

2. The information processing method according to claim 1, wherein
the receiving the first request from the MEC comprises: receiving the first request from the MEC through a Network Exposure Function (NEF);
the transmitting the first response to the MEC comprises: transmitting the first response to the MEC through the NEF.

3. The information processing method according to claim 1, wherein the obtaining the network data about the target application in response to the first request comprises:
transmitting a second request to a Network Function (NF) in response to the first request; and
receiving a second response from the NF, wherein the second response comprises the network data about the target application.

4. The information processing method according to claim 1, wherein the obtaining the predicted service experience data in accordance with the network data comprises:
taking the network data as an input of a prediction model, running the prediction model, and taking an output of the prediction model as the predicted service experience data,
wherein the prediction model is obtained through training in accordance with service experience data obtained from an Application Function (AF) and network data obtained from an NEF.

5. The information processing method according to claim 1, wherein subsequent to receiving the first request from the MEC, the information processing method further comprises:
transmitting a third request to an AF; and
receiving a third response from the AF, the third response comprising service experience data.

6. The information processing method according to claim 5, wherein the obtaining the predicted service experience data in accordance with the network data comprises:
obtaining a prediction model in accordance with the service experience data and the network data;
re-obtaining network data from an NF; and
taking the re-obtained network data as an input of the prediction model, running the prediction model, and taking an output of the prediction model as the predicted service experience data.

7. An information processing method for a Mobile Edge Computing (MEC), comprising:
transmitting a first request to a Network Data Analytics Function (NWDAF), wherein the first request comprises information about a target application;
receiving a first response from the NWDAF, wherein the first response comprises predicted service experience data about the target application obtained by the NWDAF; and
obtaining a parameter adjustment strategy for the target application in accordance with the predicted service experience data.

8. The information processing method according to claim 7, wherein
the transmitting the first request to the NWDAF comprises: transmitting the first request to the NWDAF through a Network Exposure Function (NEF), and
the receiving the first response from the NWDAF comprises: receiving the first response from the NWDAF through the NEF.

9. An information processing apparatus for a Network Data Analytics Function (NWDAF), comprising:
a first reception module configured to receive a first request from a Mobile Edge Computing (MEC), wherein the first request comprises information about a target application;
a first obtaining module configured to obtain network data about the target application in response to the first request;
a second obtaining module configured to obtain predicted service experience data in accordance with the network data; and
a first transmission module configured to transmit a first response to the MEC, wherein the first response comprises the predicted service experience data.

10. An information processing apparatus for a Mobile Edge Computing (MEC), comprising:
a first transmission module configured to transmit a first request to a Network Data Analytics Function (NWDAF), wherein the first request comprises information about a target application;
a first reception module configured to receive a first response from the NWDAF, wherein the first response comprises predicted service experience data about the target application obtained by the NWDAF; and
a processing module configured to obtain a parameter adjustment strategy for the target application in accordance with the predicted service experience data.

11. An information processing device for a Network Data Analytics Function (NWDAF), comprising a processor and a transceiver, wherein
the transceiver is configured to receive a first request from a Mobile Edge Computing (MEC), the first request comprises information about a target application;
the processor is configured to obtain network data about the target application in response to the first request, and obtain predicted service experience data in accordance with the network data, and
the transceiver is configured to transmit a first response to the MEC, the first response comprises the predicted service experience data.

12. An information processing device for a Mobile Edge Computing (MEC), comprising a processor and a transceiver, wherein
the transceiver is configured to:
transmit a first request to a Network Data Analytics Function (NWDAF), wherein the first request comprises information about a target application; and
receive a first response from the NWDAF, wherein the first response comprises predicted service experience data about the target application obtained by the NWDAF;
the processor is configured to obtain a parameter adjustment strategy for the target application in accordance with the predicted service experience data.

13. A communication device, comprising a transceiver, a memory, a processor, and a computer program stored in the memory and executed by the processor, wherein
the processor is configured to read the computer program in the memory, to cause the communication device to implement steps of the information processing method according to any one of claims 1 to 6, or implement steps of the information processing method according to claim 7 or 8.

14. A computer-readable storage medium storing therein a computer program, wherein the computer program is executed by a processor, so as to implement steps of the information processing method according to any one of claims 1 to 6, or implement steps of the information processing method according to claim 7 or 8.
